# EUROPEAN PATENT APPLICATION

(11) **EP 2 218 615 A1**
(43) Date of publication of application: **18.08.2010**
(21) Application number: 10153495.6
(22) Date of filing: 12.02.2010
(51) Int. Cl.: B60R 25/02

(54) **Electric steering lock for vehicles**

(30) Priority: 13.02.2009 IT TO20090105
(71) Applicant: TRW Automotive Italia S.p.A, 10129 Torino (IT)
(72) Inventor: Graglia, Daniele, 10026 Santena (IT)
(74) Representative: Jorio, Paolo

(57) **Abstract**

In an electric steering lock (1) for vehicles, an element (6) for angular locking of a steering shaft (3) is displaced by a driving group (8) between a forward operational position, in which it holds the steering shaft (3) in an angular position, and a retracted resting position in which it allows a free rotation of the steering shaft (32); the driving group (8) being provided with an electric motor (25) and a mechanical transmission (19, 22) interposed between the motor (25) and the locking element (6), and with an elastic device (12) cooperating with the electric motor (25) to displace the locking element (6) towards its retracted resting position.

## Description

The present invention relates to an electric steering lock for vehicles.

In particular, the present invention relates to an electric steering lock for vehicles comprising an elongated locking element and a power mechanical trasmission to displace the elongated element between a forward operational position in which the elongated element holds the steering shaft of the vehicle in a fixed angular position in relation to a fixed reference element, and a retracted resting or disengaged position in which the elongated element permits free rotation of the steering shaft in relation to such fixed element.

The elongated element slides in a guide and has a front terminal portion or prong which, when the elongated element is in the forward operational angular blocking position, engages in a radial housing of the shaft.

When the prong engages the housing, following accidental or involuntary rotation of the steering shaft, in some cases transverse shear stress is applied to the elongated element which inevitably generates friction components between the prong and the attachment housing and also between the element and the related guide. These friction components oppose return of the element to its retracted resting position, generating overloads on the transmission and the drive motor of the transmission with, consequently, much longer response times in the release phase than envisaged in the project. To take into account the above problem, the electric motors used are often over-scaled with evident increases in the related construction costs.

The purpose of the present invention is to implement an electric steering lock whose construction characteristics provide a simple, economical solution to the aforementioned problems.

According to the present invention, an electric steering lock for vehicles is implemented comprising an angular locking element and driving means to displace the angular locking element along a rectilinear displacement path between a forward operational position in which the locking element maintains a steering shaft in an angularly fixed position, and a retracted resting position, in which the elongated element permits free rotation of the steering shaft around its axis, said driving means comprising an electric motor and transmission means interposed between the motor and the locking element, characterised in that said transmission means further comprise elastic thrust means for displacing said locking element towards the retracted resting position thereof.

Preferably in the steering lock defined above, said elastic means comprise at least one wire spring and, advantageously, a pair of wire springs arranged on diametrically opposite parts of said rectilinear displacement path of said locking element.

The invention is now described referring to the accompanying drawings which illustrate a non-limitative example of embodiment in which:
Figure 1 is a plan view, with parts removed for clarity, of a preferred embodiment of the electric steering lock according to the present invention; and
Figure 2 is a perspective view in enlarged scale of a part of Figure 1.

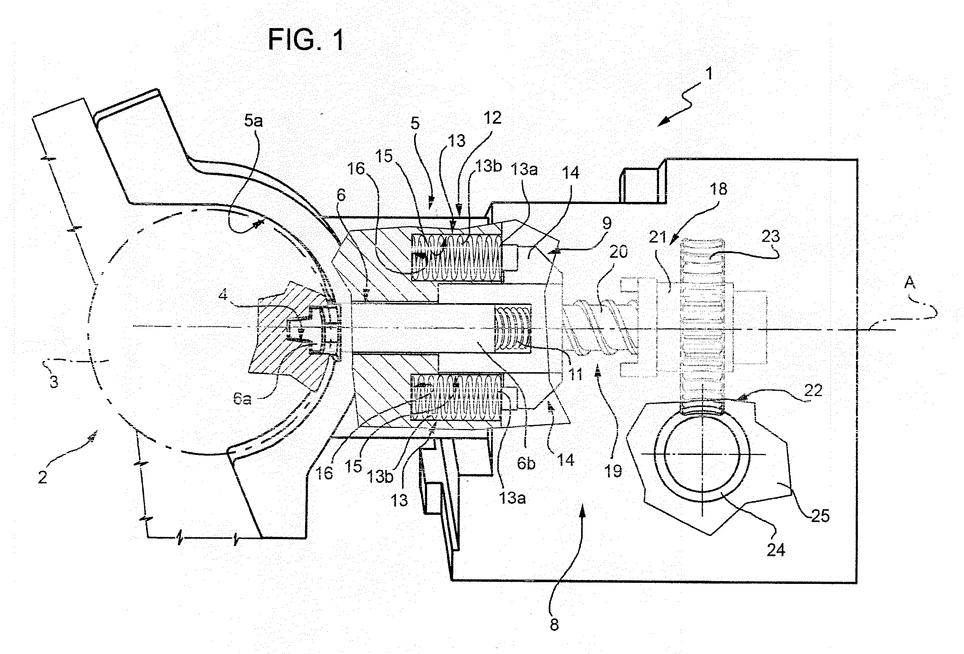

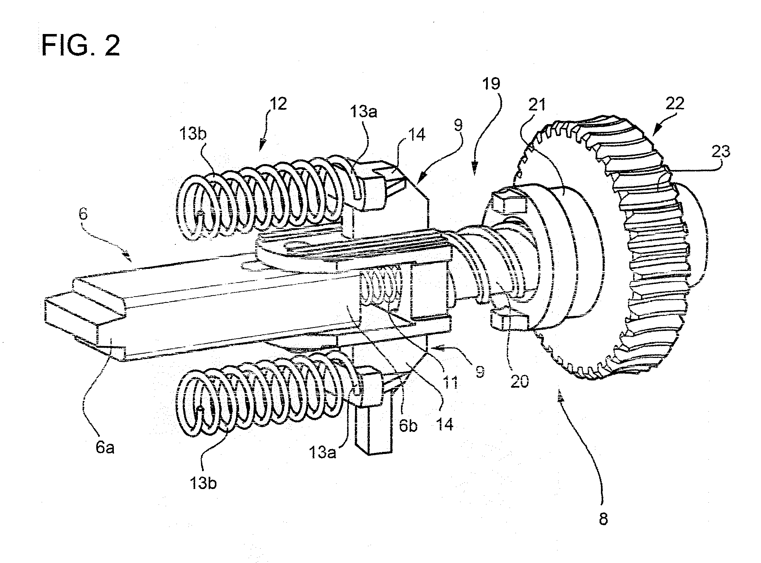

In Figure 1, 1 indicates, generally, an electric steering lock for vehicles coupled to a known steering group 2, whose steering shaft 3 has a radial housing 4 (Figure 2).

The electric steering lock 1 comprises an outer fixed attachment housing 5, which defines a seat 5a (Figure 1) in which the shaft 3 is housed in known manner, and houses an alongated angular locking element 6 of the shaft 3 in relation to the outer housing 5. The element 6 is coupled to the housing 5 in such a way as to slide axially in a rectilinear direction A (Figure 1) perpendicular to the shaft 3 and moves, by virtue of the thrust exerted by a driving group 8, between a forward angular locking position in which a front portion or prong of the element 6 protrudes inside the seat 5a and engages the radial housing 4 (Figure 1), and a retracted resting position in which the front portion 6a disengages the housing 4 allowing the shaft 3 to rotate freely in relation to the housing 5.

As shown in Figure 1 and, in particular, in Figure 2, the driving group 8 comprises a slide 9 which is coupled to the housing 5 in such a way as to slide in opposite directions in a direction parallel to direction A and in a fixed angular position and to which a rear terminal portion 6b of the elongated element 6 is connected. In the particular embodiment described, the rear portion 6b is coupled to the slide 9 with axial play, that is to say in direction A, and is maintained in its end of stroke position by an elastic spring 11 interposed between such portion 6b and the slide 9.

Also referring to Figure 1, an elastic group 12 is interposed between the slide 9 and the housing 5, which elastic group 12 exerts a retracting action on the slide 9, i.e. of retraction from the shaft 3 and, therefore, of displacement of the elongated element 6 towards its retracted resting position. In the particular embodiment described, the elastic group 12 comprises a pair of wire compression springs 13 arranged on diametrically opposite parts of direction A and of the rear portion 6b of the elongated element 6. Each spring 13 presents a respective axis parallel to direction A, an own rear terminal section 13a coupled to a related radial arm 14 of the slide 9 and a respective front terminal section 13b which extends inside a relative blind hole 15 (Figure 1) so that it is abuts against a bottom wall 16 of such relative blind hole 13.

Also referring to Figures 1 and 2, the group 8 further comprises a driving assembly 18 to move the slide 9 in opposite directions parallel to the direction A between two extreme end of stroke positions. The assembly 18 comprises a lead screw transmission 19, one of whose externally threaded screws 20 extends parallel to the direction A, has an own front end connected integrally to slide 9 and a portion engaging a nut screw 21 coupled to the housing 5 in such a way as to rotate and in an axially fixed position. The nut screw 21 is rotated by a worm screw-helical wheel transmission (partially illustrated in Figure 2) whose helical wheel 23 is stably connected on the nut screw 21 co-axially to such nut screw 21 and engages with a worm screw 24 that extends perpendicularly to the direction A and is splined on the drive shaft of a reversible electric motor 25 (Figure 1).

In use, starting from the condition in which the elongated element 6 and the slide 9 are in their retracted release position, activating the motor 25, the slide 9 and the elongated element 6 are moved forward in direction A until the portion 6a engages in the housing 4. During the forward movement of the slide 9, the springs 13 are gradually compressed between the slide 9 itself and the respective bottom walls 16 of the blind holes 15 until the maximum compression load is reached when the front portion 6a of the element 6 engages the housing 4. In this phase, the spring 11, initially precompressed, is further compressed in the case in which the elongated element 6 is not in the housing 4 and therefore the front portion 6a does not engage inside the housing 4.

At the moment in which the direction of rotation of the motor 25 is inverted to stop the slide 9 and to bring the elongated element 6 to its retracted release position, to the action exerted on the slide 9 by the motor 25 by way of the transmissions 19 and 22, the thrusting action exerted by the springs 13 is added, thereby guaranteeing disengagement of the housing 4 by the portion 6a also in the presence of friction components between the various parts in their respective motion.

From the above, it is evident that modifications and changes may be made to the steering lock 1 described without however leaving the extent of the protection defined by the independent claim.

In particular, the elastic group 12 could be constructed in a different manner from that described by way of example. More specifically, the elastic group 12 could be replaced or flanked by a spring arranged co-axially to direction A. Also, the springs 13 could be of a different number from that indicated or arranged in different positions from those indicated. Not only, the elastic group 12 could comprise traction instead of compression springs.

## Claims

1. An electric steering lock for vehicles comprising an angular locking element and driving means to displace the angular locking element along a rectilinear displacement path between a forward operational position, in which the locking element holds a steering shaft in an angularly fixed position, and a retracted resting position, in which the elongated element allows a free rotation of the steering shaft about the axis thereof, said driving means comprising an electric motor and transmission means interposed between the motor and the locking element, **characterised in that** said transmission means further comprise elastic thrust means for displacing said locking element towards the retracted resting position thereof.

2. The steering lock according to claim 1, **characterised in that** said elastic means comprises at least one wire spring.

3. The steering lock according to claim 1 or 2, **characterised in that** said elastic means comprises a pair of wire springs arranged on diametrically opposite parts of said rectilinear displacement path of said locking element.

4. The steering lock according to claim 3, **characterised in that** said springs have respective axes parallel to said rectilinear displacement path.

5. The steering lock according to claim 3 or 4, **characterised in that** said wire springs are compression springs.

6. The steering lock according to claim 4, **characterised in that** it comprises an outer fixed attachment housing; said housing comprising for each of said wire springs, a relative at least partial housing and guide elongated seat.

7. The steering lock according to any of the preceding claims, **characterised in that** it comprises an outer attachment housing, a slide bearing said angular locking element and coupled to said outer housing to slide in opposite directions parallel to said forward rectilinear path in virtue of the thrust of said driving means; said elastic means being interposed between said slide and said outer housing.
